# EUROPÄISCHE PATENTANMELDUNG

(11) **EP 1 842 660 A1**
(43) Veröffentlichungstag der Anmeldung: **10.10.2007**
(21) Anmeldenummer: 06405141.0
(22) Anmeldetag: 04.04.2006
(51) Int. Cl.: B32B 5/26, D06N 7/00, A47G 27/04

(54) **Schwer entflammbarer Teppich für den Innenraum von Flugzeugen**

(71) Anmelder: Lantal Textiles, CH-4901 Langenthal (CH)
(72) Erfinder: Baumgartner, Hanspeter, 6003, Luzern (CH); Scheidegger, Paul, 4900 Langenthal (CH)
(74) Vertreter: Rüfenacht, Philipp Michael

(57) **Zusammenfassung**

Ein schwer entflammbarer Teppich für den Innenraum von Flugzeugen umfasst ein eine Nutzoberfläche bildendes maschinengewebtes Gewebe, aufgebaut aus einem Grundgarn im Wesentlichen aus einem schwer entflammbaren thermoplastischen Synthesefasermaterial sowie einem Aktivgarn im Wesentlichen aus einem schwer entflammbaren thermoplastischen Synthesefasermaterial. Er umfasst weiter ein Vlies, insbesondere ein Nadelvlies, mit einem Flächengewicht von maximal 300 g/m2, bevorzugt maximal 250 g/m2, im Wesentlichen aus einem schwer entflammbaren thermoplastischen Synthesefasermaterial; sowie eine kleberhaltige Zwischenschicht zwischen dem Vlies und dem Flachgewebe, mit einem Flächengewicht von maximal 250 g/m2, bevorzugt maximal 200 g/m2. Das Gewebe ist ein Flachgewebe mit einem Flächengewicht von maximal 700 g/m2, bevorzugt maximal 550 g/m2, und das Flächengewicht des Teppichs beträgt maximal 1100 g/m2, bevorzugt maximal 1000 g/m2. Durch diese spezifische Kombination eines Flachgewebes mit einem Vlies mit den angegebenen Flächengewichten lässt sich ein leichter Teppich herstellen, welcher die mechanischen Anforderungen an einen Bodenbelag erfüllt und welcher für den Flugzeuginnenraum geeignet ist, also die gängigen Normen für die Flammfestigkeit und die Entwicklung von Rauch und toxischen Gasen erfüllt.

## Beschreibung

### Technisches Gebiet

Die Erfindung betrifft einen schwer entflammbaren Teppich für den Innenraum von Flugzeugen, umfassend ein eine Nutzoberfläche bildendes maschinengewebtes Gewebe, aufgebaut aus einem Grundgarn im Wesentlichen aus einem schwer entflammbaren thermoplastischen Synthesefasermaterial sowie einem Aktivgarn im Wesentlichen aus einem schwer entflammbaren thermoplastischen Synthesefasermaterial. Die Erfindung betrifft einen weiteren schwer entflammbaren Teppich für den Innenraum von Flugzeugen, bei welchem die Nutzoberfläche von einem maschinengewebten Gewebe gebildet wird, welches aus einem Grundgarn im Wesentlichen aus Polyester und Baumwolle sowie einem Aktivgarn im Wesentlichen aus Wolle gebildet wird. Die Erfindung betrifft weiter ein Verfahren zum Verlegen eines schwer entflammbaren Teppichs im Innenraum von Flugzeugen.

### Stand der Technik

Teppiche, also textile Flächengebilde, die aus einem Grundgewebe und einer die Nutzoberfläche primär bildenden Aktivschicht bestehen und die überwiegend als Fussbodenbelag eingesetzt werden, gehören zur üblichen Innenausstattung von Flugzeugen. Neben dem Boden werden oft insbesondere auch Bereiche der Innenwände von Flugzeugen mit Teppichen versehen. Teppiche in Flugzeugen unterliegen besonders hohen Anforderungen: Insbesondere müssen sie eine hohe Flammfestigkeit aufweisen und die Entwicklung von Rauch und toxischen Gasen darf im Brandfall strenge Grenzwerte nicht überschreiten. Entsprechende Standards sind üblicherweise gesetzlich vorgeschrieben, d. h. insbesondere bei Linienflugzeugen dürfen nur Teppiche eingesetzt werden, welche die Normen auch erfüllen, beispielsweise die Norm ABD 0031 zur Entwicklung von Rauch und toxischen Gasen sowie die Norm FAR 25.853 zur Entflammbarkeit.

Aus dem Stand der Technik sind verschiedene Teppiche für den Einsatz im FlugzeugInnenraum bekannt. Bisher dominierten Florteppiche aus Wollgarnen, seit einiger Zeit werden jedoch auch synthetische Teppiche entwickelt. So offenbart beispielsweise die US 4,435,459 (Dow Chemical Co.) einen schwer entflammbaren Teppich mit einem textilen Rücken, durch welchen ein Garn gewoben oder getuftet und anschliessend mit einer spezifischen Polyurethan-Zusammensetzung fixiert ist.

Die EP 1 548 182 A2 (Uniplas Shiga Corp., Mitsubishi Engineering-Plastics Corp.) beschreibt einen schwerentflammbaren Teppich aus einem Nylon-Stapelgarn mit einem textilen Rücken aus Polyesterfasern, wobei das Stapelgarn durch eine Latex-Zusammensetzung mit dem Rücken verbunden ist.

Neben den Anforderungen an die Flammfestigkeit und das Verhalten im Brandfall kommt dem Flächengewicht eines für die Innenausstattung von Flugzeugen verwendeten Teppichs besondere Bedeutung zu. Angesichts der grossen mit Teppichen versehenen Flächen in einem modernen Linienflugzeug führt bereits eine Reduktion des Flächengewichts von einigen Prozent zu erheblichen Treibstoff- und somit Kosteneinsparungen.

Die EP 0 600 171 B1 (Hoechst AG) schlägt die Herstellung eines schwerentflammbaren Teppichbodens mit geringem Flächengewicht vor, welcher aus einem Trägermaterial aus normal- oder schwerentflammbaren Synthesefasern, einem darin eingebundenen Polgarn aus schwerentflammbaren Synthesefasern (z. B. Trevira® CS) und einer Rückenausrüstung aus einem spezifischen Polyurethan gebildet ist. Die Gewichtsanteile von Polmaterial, Träger und Ausrüstungsmittel betragen etwa 700 bis 1300 g/m² Polmaterial, 80 bis 250 g/m² Träger und 150 bis 500 g/m², vorzugsweise 200 bis 300 g/m² Polyurethan-Ausrüstung. Konkret offenbart ist ein Tufting-Teppich, bestehend aus einem durch Nadeln verfestigten Spunbond aus unmodifizierten Polyethylenterephthalat-Filamenten, in das ein Polgarn aus schwerentflammbarem Polyethylenterephthalat eingenadelt ist, umfassend eine rückseitige Polyurethan-Beschichtung. Weiter konkret offenbart ist ein für die Herstellung von Lamellen für Horizontal- und Vertikal-Jalousien geeignetes versteiftes textiles Flächengebilde aus unmodifiziertem Polyethylenterephthalatgarn in Kreuzköperbindung. Zum Versteifen wird das textile Flächengebildet in einer Polyurethandispersion getränkt, anschliessend auf eine gewisse Dispersionsaufnahme abgequetscht und schliesslich getrocknet.

In Flugzeugen verwendete Teppiche werden auch mechanisch stark beansprucht und müssen deshalb regelmässig ausgewechselt werden. In diesem Zusammenhang ist es zum einen erwünscht, dass die Teppiche dauerhaft sind, so dass die Wechselintervalle möglichst lang sind, zum anderen sollen sich die Teppiche auf einfache Art und Weise auswechseln lassen. Die oft in Flugzeugen verwendeten Wollteppiche werden üblicherweise am Untergrund durch eine flächige oder punktweise Verklebung befestigt. Um das Anbringen und das Auswechseln des Teppichs zu vereinfachen, schlägt die WO 90/01411 (Orcon Corp.) als Alternative ein zum Befestigen von Teppichen in Flugzeugen geeignetes Klebeband vor.

Es besteht weiterhin ein Bedürfnis, das Flächengewicht von Teppichen für den Innenraum von Flugzeugen zu reduzieren. Die Teppiche sollen zudem möglichst einfach und schnell im Flugzeug befestigbar und auswechselbar sein.

### Darstellung der Erfindung

Aufgabe der Erfindung ist es deshalb, einen dem eingangs genannten technischen Gebiet zugehörenden Teppich zu schaffen, welcher ein geringes Flächengewicht aufweist und welcher bevorzugt einfach und schnell im Flugzeug befestigbar ist.

Die Lösung der Aufgabe ist durch die Merkmale des Anspruchs 1 definiert. Gemäss der Erfindung ist das maschinengewebte Gewebe des Teppichs ein Flachgewebe mit einem Flächengewicht von maximal 700 g/m², bevorzugt maximal 550 g/m². Ein Flachgewebe zeichnet sich dadurch aus, dass es kein polbildendes Fadensystem aufweist; entsprechend wird es auf einer Flachwebemaschine (ohne Ruten) hergestellt. Der Teppich umfasst zudem ein Vlies, insbesondere ein Nadelvlies, mit einem Flächengewicht von maximal 300 g/m², bevorzugt maximal 250 g/m², im Wesentlichen aus einem schwer entflammbaren thermoplastischen Synthesefasermaterial sowie eine kleberhaltige Zwischenschicht zwischen dem Vlies und dem Flachgewebe, mit einem Flächengewicht von maximal 250 g/m², bevorzugt maximal 200 g/m². Die Flächengewichte der einzelnen Komponenten des Teppichs sind so gewählt, dass das Flächengewicht des Teppichs maximal 1100 g/m² beträgt, bevorzugt maximal 1000 g/m².

Durch die spezifische erfindungsgemässe Kombination eines Flachgewebes mit einem Vlies mit den angegebenen Flächengewichten lässt sich ein leichter Teppich herstellen, welcher die mechanischen Anforderungen an einen Bodenbelag erfüllt und welcher für den Flugzeuginnenraum geeignet ist, also die gängigen Normen (z. B. ABD 0031) für die Flammfestigkeit und die Entwicklung von Rauch und toxischen Gasen erfüllt. Dies wird unter anderem dadurch erreicht, dass sowohl für alle Garnsysteme als auch für das Vlies ein schwer entflammbares thermoplastisches Synthesefasermaterial verwendet wird.

Im Rahmen der Entwicklung des erfindungsgemässen Teppichs hat es sich überraschenderweise herausgestellt, dass sich ein durch ein Flachgewebe, eine Zwischenschicht und ein Vlies gebildeter Flachteppich mit geringerem Flächengewicht herstellen lässt als ein hinsichtlich der mechanischen Eigenschaften vergleichbarer Florteppich. Mit kommerziell verfügbarem Garnmaterial lässt sich ein Flachgewebe mit dem genannten Flächengewicht herstellen, welches in Zusammenwirkung mit der Zwischenschicht und dem Vlies hinsichtlich der mechanischen Beanspruchbarkeit und des ästhetischen Eindrucks die Anforderungen an einen Teppich für den Flugzeuginnenraum erfüllt. Das mittels der Zwischenschicht auf der Rückseite des Flachgewebes angebrachte Vlies dient zur mechanischen Verstärkung des Flachgewebes, indem es dem Teppich Schnittkantenfestigkeit sowie eine hohe Dimensionsstabilität verleiht, es verbessert den Gehkomfort bei dem als Bodenbelag in Freiflächen und Gängen eingesetzten Teppich und es führt zu einer besseren Schalldämmung und somit zu einer verbesserten Innenraum-Akustik im Flugzeug. Geeignete Vliese, insbesondere Nadelvliese, mit einem Flächengewicht im angegebenen Bereich sind kommerziell verfügbar.

Neben der Verbindungsfunktion zwischen Flachgewebe und Vlies werden durch die Zwischenschicht auch die Kreuzungspunkte des Flachgewebes fixiert, wodurch die mechanische Stabilität des Flachgewebes weiter erhöht wird. Die Zwischenschicht kann zudem bei geeigneter Zusammensetzung die Flammfestigkeit des Teppichs weiter erhöhen.

Aufgrund seines geringen Flächengewichts lassen sich durch den Einsatz des erfindungsgemässen Teppichs im Flugzeuginnenraum wesentliche Treibstoffeinsparungen im Flugbetrieb erzielen und somit erhebliche Kosten einsparen. Der Teppich lässt sich zudem im Vergleich mit Florteppichen ähnlicher Qualität kostengünstiger herstellen.

Der aus einem die Nutzoberfläche bildenden maschinengewebten Flachgewebe aus einem schwer entflammbaren thermoplastischen Synthesefasermaterial sowie einem mit dem Flachgewebe über eine kleberhaltige Zwischenschicht verbundenen Vlies aus einem schwer entflammbaren thermoplastischen Synthesefasermaterial hergestellte Teppich bietet im Weiteren den Vorteil, dass er mittels eines Klettbands auf einfache Weise im Flugzeuginnenraum befestigt werden kann. Zum Anbringen des Teppichs werden also Klettbänder (deren eine Seite z. B. selbstklebend ausgeführt ist) in geeigneten Abständen an den mit Teppich auszustattenden Flächen befestigt, und anschliessend wird der Teppich mit seiner durch das Vlies gebildeten Seite am befestigten Klettband angebracht. Zum Auswechseln kann der Teppich vom Klettband gelöst und der neue Teppich einfach auf das bereits vorhandene Klettband aufgedrückt werden.

Mit Vorteil sind das Grundgarn, das Aktivgarn und das Vlies aus demselben schwer entflammbaren thermoplastischen Synthesefasermaterial hergestellt. Dieses Synthesematerial ist mit Vorteil dauerhaft schwer entflammbar, d. h. das Material selbst ist flammhemmend modifiziert und weist nicht nur eine entsprechende Beschichtung auf. Als besonders geeignet haben sich Materialien auf der Basis von Polyester erwiesen. Ein geeignetes Material ist insbesondere Trevira® CS der Firma Hoechst. Dieses Material basiert auf Polyester, in dessen Polymergerüst ein phosphorhaltiges Comonomer eingebaut ist, was eine permanente Schwerentflammbarkeit des Materials bewirkt. Ein Flachteppich, bei welchem sowohl das Grund- und das Aktivgarn als auch das Vlies aus diesem Material hergestellt sind, erfüllt die oben erwähnten Normen, ist auch bei geringem Gewicht mechanisch dauerhaft und erfüllt die ästhetischen Erwartungen an einen Teppich für den Flugzeuginnenraum. Das Material lässt sich mit geeigneten, kommerziell verfügbaren Substanzen schmutz-, wasser- und ölabweisend ausrüsten.

Die Verbindung des Flachgewebes und des Vlieses erfolgt mit Vorteil durch Kaschieren. Dazu wird eines der beiden flächigen Materialien mit dem Material für die Zwischenschicht rückseitig beschichtet. In einer Kaschierstation wird dann das zweite flächige Material mit seiner Rückseite auf die beschichtete Seite des ersten Materials geführt, worauf die beiden Materialien unter Druck und bei einer vorgegebenen Temperatur, z. B. zwischen zwei Walzen, verpresst werden können. Anschliessend können die Materialien aktiv abgekühlt werden.

Die kleberhaltige Zwischenschicht zwischen dem Vlies und dem Flachgewebe ist mit Vorteil durch eine Zusammensetzung gebildet, welche folgendes enthält:
a) einen Klebstoff auf der Basis von Polyacrylat;
b) Wasser;
c) ein Flammschutzmittel, insbesondere auf der Basis von Aluminiumhydroxid Al(OH)₃; und
d) oberflächenaktive Substanzen.

Es hat sich in Versuchen erwiesen, dass mit einer derartigen Zwischenschicht ein leichter und dauerhafter Flachteppich herstellbar ist, welcher die einschlägigen Normen zur Entflammbarkeit sowie zur Entwicklung von Rauch und toxischen Gasen erfüllt. Die oberflächenaktiven Substanzen umfassen insbesondere auch Benetzungsmittel. Die Zwischenschicht kann weitere - gängige - Stoffe enthalten, insbesondere Appreturmittel zur Veredelung des Flachgewebes.

Zum Anwendungszeitpunkt beträgt der Anteil des Klebstoffs bevorzugt 40-70 Gew.% und der Anteil des Wassers 20-40 Gew.%. Eine derartige Zusammensetzung ermöglicht ein effizientes Verbinden des Flachgewebes mit dem Vlies und ist besonders für den Kaschiervorgang geeignet.

Damit ein leichter, dauerhafter und ästhetisch vorteilhafter Teppich hergestellt werden kann, beträgt das Verhältnis zwischen dem Flächengewicht des Aktivgarnanteils und dem Flächengewicht des Grundgarnanteils des Flachgewebes zwischen 1.0 und 2.5, insbesondere zwischen 1.3 und 2.0. Dadurch wird einerseits eine gute Stabilität des Flachgewebes erreicht, andererseits hat der Flachteppich aber auch ein "teppichartiges" Erscheinungsbild und wirkt nicht nur "stoffartig".

Ebenfalls von Vorteil ist zum Erreichen dieser Ziele der Einsatz von Endlosgarnen für das Grundgarn und für das Aktivgarn, wobei das Grundgarn einen Titer von 400-1'300 Dtex, insbesondere von 600-1'000 Dtex, und das Aktivgarn einen Titer von 2'000-6'000 Dtex, insbesondere von 3'000-5'000 Dtex, aufweist. Das Grundgarn ist sowohl im Schuss- als auch im Kettfadensystem verarbeitet, während das Aktivgarn mit Vorteil nur im Kettsystem Verwendung findet. Die Dichten der einzelnen Garne im Kett- und gegebenenfalls im Schusssystem werden so gewählt, dass die oben angeführten Flächengewichte erreicht werden.

Zur Verbesserung des elektrostatischen Verhaltens des erfindungsgemässen Teppichs weist das Aktivgarn mit Vorteil einen Anteil von 0.5 - 5 Gew.%, insbesondere von 1 - 3 Gew.%, Kohlefasern auf. Diese verringern den Oberflächenwiderstand und verhindern somit die Bildung von elektrostatischen Aufladungen. Ein derartiger Anteil an Kohlefasern führt nicht zu einer nennenswerten Beeinträchtigung der vorteilhaften Eigenschaften hinsichtlich Flammschutz, Rauchentwicklung und Toxizität.

Es lässt sich ein weiterer für den Flugzeuginnenraum geeigneter Teppich mit ähnlichem Aufbau herstellen. Dieser Teppich umfasst:
a) ein eine Nutzoberfläche bildendes maschinengewebtes Flachgewebe mit einem Flächengewicht von maximal 800 g/m², bevorzugt maximal 650 g/m², aufgebaut aus einem Grundgarn im Wesentlichen aus Polyester und Baumwolle sowie einem Aktivgarn im Wesentlichen aus Wolle;
b) ein Vlies mit einem Flächengewicht von maximal 300 g/m², bevorzugt maximal 250 g/m², im Wesentlichen aus Wolle, mit einer Flammschutzausrüstung; sowie
c) eine kleberhaltige Zwischenschicht zwischen dem Vlies und dem maschinengewebten Gewebe, mit einem Flächengewicht von maximal 400 g/m², bevorzugt maximal 350 g/m².

Auch dieser Teppich umfasst ein Flachgewebe. Dieses zeichnet sich dadurch aus, dass es kein polbildendes Fadensystem aufweist; entsprechend wird es auf einer Flachwebemaschine (ohne Ruten) hergestellt. Die Flächengewichte der einzelnen Komponenten des Teppichs sind so gewählt, dass das Flächengewicht des Teppichs maximal 1300 g/m² beträgt, bevorzugt maximal 1150 g/m².

Durch die spezifische erfindungsgemässe Kombination eines Flachgewebes mit einem Vlies mit den angegebenen Flächengewichten lässt sich ein leichter Teppich herstellen, welcher die mechanischen Anforderungen an einen Bodenbelag erfüllt und welcher für den Flugzeuginnenraum geeignet ist, also eine hohe Flammfestigkeit und im Brandfall eine geringe Entwicklung von Rauch und toxischen Gasen aufweist. Das geringe Gewicht basiert wiederum auf der überraschenden Entdeckung, dass sich ein durch ein Flachgewebe, eine Zwischenschicht und ein Vlies gebildeter Flachteppich mit geringerem Flächengewicht herstellen lässt als ein hinsichtlich der mechanischen Eigenschaften vergleichbarer Florteppich. Mit kommerziell verfügbarem Garnmaterial lässt sich ein Flachgewebe mit dem genannten Flächengewicht herstellen, welches in Zusammenwirkung mit der Zwischenschicht und dem Vlies hinsichtlich der mechanischen Beanspruchbarkeit und des ästhetischen Eindrucks die Anforderungen an einen Teppich für den Flugzeuginnenraum erfüllt. Das mittels der Zwischenschicht auf der Rückseite des Flachgewebes angebrachte Vlies dient zur mechanischen Verstärkung des Flachgewebes, indem es dem Teppich Schnittkantenfestigkeit sowie eine hohe Dimensionsstabilität verleiht, es verbessert den Gehkomfort bei dem als Bodenbelag in Freiflächen und Gängen eingesetzten Teppich und es führt zu einer besseren Schalldämmung und somit zu einer verbesserten Innenraum-Akustik im Flugzeug.

Neben der Verbindungsfunktion zwischen Flachgewebe und Vlies werden durch die Zwischenschicht auch die Kreuzungspunkte des Flachgewebes fixiert, wodurch die mechanische Stabilität des Flachgewebes weiter erhöht wird. Die Zwischenschicht kann zudem bei geeigneter Zusammensetzung die Flammfestigkeit des Teppichs weiter erhöhen.

Aufgrund seines geringen Flächengewichts lassen sich auch durch den Einsatz dieses Teppichs im Flugzeuginnenraum wesentliche Treibstoffeinsparungen im Flugbetrieb erzielen und somit erhebliche Kosten einsparen. Auch dieser Teppich lässt sich zudem im Vergleich mit Florteppichen ähnlicher Qualität kostengünstiger herstellen. Hinsichtlich des Flächengewichts können bei vergleichbarer mechanischer Qualität und vergleichbaren ästhetischen Anforderungen die tiefen Werte des vorstehend offenbarten, aus schwer entflammbarem thermoplastischem Synthesefasermaterial hergestellten Teppichs nicht ganz erreicht werden. Dafür ergibt sich aufgrund des unterschiedlichen Aktiv- und auch Grundgarnmaterials eine andere Textur und ein anderer ästhetischer Eindruck.

Grundgarne mit einem Anteil von 50-80 %, insbesondere 60-70 %, Polyester und einen Anteil von 20-50 %, insbesondere 30-40 %, Baumwolle haben sich als vorteilhaft hinsichtlich der mechanischen Eigenschaften und des Flächengewichts des Teppichs herausgestellt.

Die Verbindung des Flachgewebes und des Vlieses erfolgt mit Vorteil durch Kaschieren. Dazu wird eines der beiden flächigen Materialien mit dem Material für die Zwischenschicht rückseitig beschichtet. In einer Kaschierstation wird dann das zweite flächige Material mit seiner Rückseite auf die beschichtete Seite des ersten Materials geführt, worauf die beiden Materialien unter Druck und bei einer vorgegebenen Temperatur, z. B. zwischen zwei Walzen, verpresst werden können. Anschliessend können die Materialien aktiv abgekühlt werden.

Die kleberhaltige Zwischenschicht zwischen dem Vlies und dem Flachgewebe ist mit Vorteil durch eine wässrige Mischung aus organischen Phosphor/Stickstoffverbindungen und Aluminiumhydroxid mit einer Dispersion auf der Basis von Polyvinylacetat-Ethylen-Copolymerisat als Binder gebildet.

Es hat sich in Versuchen erwiesen, dass mit einer derartigen Zwischenschicht ein leichter und dauerhafter, schwer entflammbarer Flachteppich herstellbar ist. Die Zwischenschicht kann weitere - gängige - Stoffe enthalten, insbesondere Appreturmittel zur Veredelung des Flachgewebes.

Damit ein leichter, dauerhafter und ästhetisch vorteilhafter Teppich hergestellt werden kann, beträgt das Verhältnis zwischen dem Flächengewicht des Aktivgarnanteils und dem Flächengewicht des Grundgarnanteils des Flachgewebes zwischen 1.0 und 2.5, insbesondere zwischen 1.3 und 2.0. Dadurch wird einerseits eine gute Stabilität des Flachgewebes erreicht, andererseits hat der Flachteppich aber auch ein "teppichartiges" Erscheinungsbild und wirkt nicht nur "stoffartig".

Ebenfalls von Vorteil ist zum Erreichen dieser Ziele in diesem Fall der Einsatz von Stapelgarnen für das Grundgarn und für das Aktivgarn, wobei das Grundgarn einen Titer von 400-1'300 Dtex, insbesondere von 600-1'000 Dtex, und das Aktivgarn einen Titer von 2'000-6'000 Dtex, insbesondere von 3'000-5'000 Dtex, aufweist. Das Grundgarn ist sowohl im Schuss- als auch im Kettfadensystem verarbeitet, während das Aktivgarn mit Vorteil nur im Kettsystem Verwendung findet. Die Dichten der einzelnen Garne im Kett-und gegebenenfalls im Schusssystem werden so gewählt, dass die oben angeführten Flächengewichte erreicht werden.

Zur Verbesserung des elektrostatischen Verhaltens des erfindungsgemässen Teppichs weist das Aktivgarn mit Vorteil einen Anteil von 0.1 - 0.5 Gew.%, insbesondere ca. 0.3 Gew.%, Stahlfasern auf. Diese verringern den Oberflächenwiderstand und verhindern somit die Bildung von elektrostatischen Aufladungen. Ein derartiger Anteil an Stahlfasern führt nicht zu einer nennenswerten Beeinträchtigung der vorteilhaften Eigenschaften hinsichtlich Flammschutz, Rauchentwicklung und Toxizität.

Aus der nachfolgenden Detailbeschreibung und der Gesamtheit der Patentansprüche ergeben sich weitere vorteilhafte Ausführungsformen und Merkmalskombinationen der Erfindung.

### Wege zur Ausführung der Erfindung

Ein erfindungsgemässer Teppich für den Innenraum von Flugzeugen setzt sich generell aus mindestens drei Schichten, nämlich aus einem die Nutzoberfläche bildenden maschinengewebten Gewebe, einem Vlies sowie einer das Gewebe und das Vlies verbindenden Zwischenschicht zusammen. Durch die Auswahl der für die einzelnen Schichten verwendeten Materialien und durch Variation der jeweiligen Parameter der Schichten lassen sich die Eigenschaften des Teppichs hinsichtlich Flächengewicht, mechanischer Belastbarkeit, Trittkomfort, Schalldämmung und Ästhetik gezielt beeinflussen. Im Folgenden werden einige Ausführungsbeispiele dargestellt.

### Beispiel 1

Beim Teppich gemäss einem ersten Ausführungsbeispiel ist das Vlies der Rückseite des Flachgewebes aufkaschiert. Das Flachgewebe setzt sich aus einem Grundgarn und einem Aktivgarn zusammen, welche beide aus dem Material Trevira® CS der Firma Hoechst hergestellte Endlosgarne sind. Das Grundgarn weist einen Titer von 850 Dtex auf, das Aktivgarn einen (Einzel-)Titer von 4000 Dtex. Das Aktivgarn umfasst neben dem Grundmaterial Trevira® CS einen Anteil von 2 % Kohlefasern.

Das Flachgewebe wird auf einer Flachwebemaschine (also einer Webmaschine ohne Ruten) mit einer Blattbreite von 190.4 cm hergestellt, wobei ein erster Baum mit 3040 Kettfäden des Grundgarns bestückt wird, während auf einem zweiten Baum 768 mal je zwei zusammen gedrehte Fäden des Aktivgarns aufgesteckt werden. Die Kettfäden des Grundgarns sind auf vier Schäften zu 760 Litzen, diejenigen des Aktivgarns auf 12 Schäften zu 64 Litzen aufgesteckt. Der Schuss wird wiederum durch das Grundgarn gebildet, wobei 8 Fäden / cm eingewoben werden.

Für die Fadendichte im Kettsystem ergibt sich für das Grundgarn ein Wert von 16 Fäden/cm, für das Aktivgarn ein Wert von 4(*2) Fäden / cm. Das Flächengewicht des Grundgarnanteils beträgt ca. 204 g / m², dasjenige des Aktivgarns ca. 320 g / m².

Beim Vlies handelt es sich um ein flammhemmendes, leitfähiges Nadelvlies. Es ist aus schwer entflammbaren Polyester-Fasern gebildet, welche wiederum aus dem Material Trevira® CS der Firma Hoechst hergestellt sind. Derartige Vliese sind kommerziell verfügbar, auf Rollen von bis zu 4 m Breite und 500 m Länge. Das Flächengewicht dieses Trägervlieses beträgt ca. 200 g / m² gemäss Norm EN 965, seine Dicke beträgt 2.1 mm gemäss Norm EN 964-1.

In mechanischer Hinsicht weist das Trägervlies eine Höchstzugkraft in Längsrichtung von 5.0 kN/m sowie in Querrichtung von 7.0 kN/m auf (gemäss Norm EN ISO 10319), die Weiterreissfestigkeit nach DIN 53859 beträgt 70 N. Der Erdableitwiderstand beträgt (bei einem Potential von 100 V) unter 10⁸ MΩ. Das Vlies fällt in die Feuerklasse M1 nach französischer Norm.

Im Rahmen eines Kaschierverfahrens wird das Flachgewebe zunächst mit einer Beschichtungszusammensetzung auf seiner Rückseite beschichtet. Dazu kann das Flachgewebe von einer Rolle über eine Walze geführt werden, auf deren Oberseite eine Rakel in einem vorgegebenen Abstand angeordnet ist. In Transportrichtung des Flachgewebes hinter der Rakel wird die Beschichtungszusammensetzung auf das Flachgewebe gegeben. Anschliessend wird eine der Breite des Flachgewebes entsprechende Vliesbahn parallel zum Flachgewebe auf die Rückseite desselben geführt. Die beiden textilen Schichten mit der dazwischen befindlichen Beschichtungsrezeptur werden dann zusammen in eine Kaschierstation transportiert, wo zunächst eine Erwärmung des Materials und anschliessend ein Verpressen zwischen zwei gegenläufigen Walzen stattfindet. Die Beschichtungsrezeptur bildet somit eine die textile Schicht verbindende Zwischenschicht. Zum Schluss wird das Flachmaterial durch einen Trockenkanal geführt, in welchem in der Zwischenschicht enthaltene Lösungsmittel entzogen werden, so dass der Flachteppich getrocknet und verfestigt wird.

Die Beschichtungszusammensetzung basiert auf einer Polyester-Polyol Isocyanurat Dispersion. Sie ist beispielsweise herstellbar durch Mischen von 60 kg Appretan N 5228-1, 35 Kg Wasser, 2.5 kg Martinal ON 313 (Basis Al(OH)₃), 2.6 kg Genaminox CLS, 0.6 kg Appretan Verdicker 3308 sowie 0.1 kg Benetzungsmittel. Für den Kaschiervorgang wird eine Temperatur von 160 °C gewählt sowie ein Druck bei den Walzen von ca. 4 Tonnen. Die Auskondensierzeit beträgt 4 Minuten. Die Menge der auf das Flachgewebe gegebenen Zusammensetzung ist so gewählt, dass nach dem Kaschieren und Trocknen des Teppichs die Zwischenschicht noch ein Flächengewicht von ca. 150 g / m² aufweist.

Mit einem derart hergestellten Teppich wurden eine Reihe von Tests und Messungen durchgeführt:

| **Test / Messgrösse** | **Norm** | **Ergebnis** |
|---|---|---|
| Flächengewicht | ISO 8543 | 875 g/m2 |
| Dicke | DIN EN ISO 1765 | 2.7 mm |
| Aussehenserhalt (Hexapod) | ISO 10361 | Klasse 4-5 |
| Boeing Trolley Test | BSS 7300 | Klasse 4-5 |
| Polfestigkeit | LT-Norm | 19.9 daN |
| Pilling (Martindale) | DIN EN ISO 12945-2 | Klasse 4 |
| vertikaler Flammtest (12s) | FAR 25.853 (Appendix F Part I (a)(1)(II)) | erfüllt |
| Rauchtest (mit Flamme) | ABD 0031 | 118 Dm (erfüllt) |
| Rauchtest (ohne Flamme) | ABD 0031 | 15 Dm (erfüllt) |
| Toxizität (mit / ohne Flamme) | ABD 0031 | erfüllt |
| Oberflächenwiderstand | DIN 54345-1 | < 10⁶ Ω |
| Durchgangswiderstand | DIN 54345-1 | 10⁶ Ω |
| Dimensionsstabilität Kettrichtung | BSS 7310 | + 0.04% |
| Dimensionsstabilität Schussrichtung | BSS 7310 | + 0.14% |
| Delaminierung Kettrichtung | ISO 36 | 5.15 daN |
| Delaminierung Schussrichtung | ISO 36 | 4.56 daN |

Der Teppich weist also ein geringes Flächengewicht auf, welches erheblich kleiner ist als dasjenige von heute üblicherweise für den Innenraum von Flugzeugen verwendeten Florteppichen. Die Abnutzungsmessungen haben eine hohe Dauerhaftigkeit und somit eine grosse Lebensdauer ergeben. Der Teppich erfüllt die gängigen Tests zur Entflammbarkeit und Flammfestigkeit sowie zur Rauchentwicklung und zur Entwicklung von toxischen Gasen bei Brandeinwirkung. Das kaschierte Vlies verhilft dem Teppich zu einer hohen Dimensionsstabilität. Aufgrund der Karbonfasern im Aktivgarnanteil und des entsprechend erniedrigten Oberflächenwiderstands des Teppichs wird die Bildung von statischen Aufladungen vermieden.

### Beispiele 2-4

Die nachfolgende Tabelle zeigt weitere Beispiele von erfindungsgemässen Flachteppichen. Wie beim Beispiel 1 sind das Flachgewebe und das Vlies aus Trevira® CS hergestellt, die Zwischenschicht weist ebenfalls dieselbe Zusammensetzung auf. Der Herstellungsprozess entspricht ebenfalls demjenigen für den Flachteppich gemäss Beispiel 1 (mit den üblichen Anpassungen des Webprozesses an unterschiedliche Fadenzahlen):

| Eigenschaft | Beispiel 2 | Beispiel 3 | Beispiel 4 |
|---|---|---|---|
| Titer Grundgarn (Dtex) | 600 | 1000 | 850 |
| Titer Aktivgarn (Dtex) | 6000 | 3200 | 7500 |
| Anzahl Fäden Grundgarn Kette | 3428 | 2664 | 3040 |
| Anzahl Fäden Aktivgarn Kette | 636 | 768 | 1024 |
| Je zusammengedrehte Fäden Aktivgarn Kette | 2 | 2 | 1 |
| Fadenzahl Kette Grundgarn 1/cm | 18.0 | 14.0 | 16.0 |
| Fadenzahl Kette Aktivgarn 1/cm | 3.3 | 4.0 | 5.4 |
| Fadenzahl Schuss Grundgarn 1/cm | 10 | 8 | 8 |
| Flächengewicht Grundgarn g/m² | 168 | 220 | 204 |
| Flächengewicht Aktivgarn g/m² | 401 | 258 | 403 |
| Verhältnis Flächengewichte Aktiv-/Grundgarn | 2.39 | 1.17 | 1.98 |
| Flächengewicht Flachgewebe g/m² | 569 | 478 | 607 |
| Flächengewicht Trägervlies g/m² | 200 | 150 | 200 |
| Dicke Trägervlies mm | 2.1 | 1.6 | 2.1 |
| Flächengewicht Zwischenschicht (trocken) g/m² | 150 | 130 | 150 |
| Flächengewicht total g/m² | 919 | 758 | 957 |

Das Beispiel 2 betrifft - verglichen mit dem Beispiel 1 - einen Teppich mit einem verhältnismässig grossen Gewichtsanteil des Aktivgarns, insbesondere weil ein Aktivgarn mit einem wesentlich grösseren Titer verwendet wird. Dadurch können gute mechanische Werte erzielt werden, der Teppich ist sehr dauerhaft und behält seine optische Eigenschaften lange bei. Aufgrund des grösseren Rasters und weil das Grundmaterial aufgrund des dichten Aktivmaterials nicht mehr sichtbar ist, ergeben sich aber weniger gestalterische Möglichkeiten als bei einem Teppich gemäss Beispiel 1.

Der Teppich gemäss Beispiel 3 hat einen hohen Anteil an Grundgarn. Dieses hat zudem einen höheren Titer als bei den vorangehenden Beispielen. Bei einem derartigen Teppich bildet auch das Grundgarn teilweise die Nutzoberfläche des Teppichs, hat also auch eine Bedeutung für die mechanischen Eigenschaften des Teppichs. Generell ist ein solcher Teppich nicht ganz so dauerhaft wie einer gemäss Beispiel 1 oder 2, aufgrund dessen, dass auch das Grundgarn von der Oberseite her sichtbar ist, ergeben sich aber vielfältige gestalterische Möglichkeiten. Weil der Grundgarnanteil von sich aus stärker ist, kann die Vliesdicke und damit das Flächengewicht des Vlieses reduziert werden, so dass sich insgesamt ein äusserst leichter Teppich fertigen lässt.

Das Beispiel 4 betrifft einen Teppich, bei welchem das Aktivgarn einzeln verwoben wird und nicht paarweise wie in den Beispielen 1-3.

### Beispiel 5

Beim Teppich gemäss einem fünften Ausführungsbeispiel umfasst das Flachgewebe ein Grundgarn aus 65 Gew.% Polyester und 35 Gew.% Baumwolle mit einem (Einzelgarn-)Titer von 500 Dtex, wobei jeweils zwei Einzelfäden miteinander verzwirnt sind. Das Aktivgarn besteht aus 99.7 Gew. Wolle und 0.3 Gew. % Stahlfasern (Bekinox® VN) und weist einen (Einzelgarn-)Titer von 3226 Dtex auf, wobei jeweils drei Einzelfäden miteinander verzwirnt sind.

Das Flachgewebe wird auf einer Flachwebemaschine (also einer Webmaschine ohne Ruten) mit einer Blattbreite von 188.6 cm hergestellt, wobei ein erster Baum mit 2640*2 Kettfäden des Grundgarns bestückt wird, während auf einem zweiten Baum 660*3 Fäden des Aktivgarns aufgesteckt werden. Die Kettfäden des Grundgarns sind auf vier Schäften zu 660 Litzen, diejenigen des Aktivgarns auf 12 Schäften zu 55 Litzen aufgesteckt. Der Schuss wird wiederum durch das Grundgarn gebildet, wobei 6 Fäden / cm eingewoben werden.

Für die Fadendichte im Kettsystem ergibt sich für das Grundgarn ein Wert von 14(*2) Fäden/cm, für das Aktivgarn ein Wert von 3.5(*3) Fäden / cm. Das Flächengewicht des Grundgarnanteils beträgt ca. 230 g / m², dasjenige des Aktivgarns ca. 385 g / m².

Beim Vlies handelt es sich um einen Wollfilz aus 100 % Wolle, welcher mechanisch und chemisch verfestigt und flammhemmend behandelt ist. Die Flammschutzausrüstung umfasst Zirkoniumacetat sowie Kaliumhexafluorzirkonat. Das Zirkoniumacetat wird beispielsweise von der Firma Thor GmbH, Speyer (Deutschland) unter dem Namen Aflammit® ZAL als transparente, niedrig viskose Lösung angeboten. Das Kaliumhexafluorzirkonat kann von derselben Firma unter dem Namen Aflammit® ZR in Pulverform bezogen werden. Die Stoffe werden im Ausziehverfahren eingesetzt, wobei eine Rezeptur mit 10 % Ameisensäure (85%ig), 8 % Zitronensäure (Monohydrat), 2 - 3 % Aflammit® ZR sowie 10 % Aflammit® ZAL eingesetzt wird. Zur Herstellung der entsprechenden Flotte werden der zunächst kalten Flotte zuerst die Ameisen- und Zitronensäure zugegeben und 10 Minuten vorlaufen gelassen. Anschliessend wird das vorgelöste Aflammit® ZR zugefügt und weitere 5 Minuten zirkuliert. Schliesslich erfolgt der Zusatz von Aflammit® ZAL und das Aufheizen der Flotte auf 70 °C. Das Flottenverhältnis beträgt 1:10 bis 1:30 (mit Vorteil im Bereich von 1:10). Der Wollfilz wird mit der erwärmten Flotte während 40-45 Minuten behandelt, anschliessend kalt gespült und getrocknet.

Die verfestigende Imprägnierung erfolgt mittels Epoxidharz. Dieser wird beispielsweise unter dem Namen Quecodur TL 1156 von der bereits erwähnten Firma Thor GmbH als wässriger Festharz angeboten und kann für den vorliegenden Zweck vor der Anwendung zu 160 g/l mit kaltem Wasser verdünnt werden. Nach dem Aufbringen des verdünnten Harzes auf den Wollfilz erfolgt wie an sich bekannt ein Auskondensieren bei ca. 150 °C während ca. 2 Minuten. Die Dicke des fertigen Wollfilzes beträgt 1.0 mm, sein Flächengewicht ca. 250 g/m².

Das Kaschierverfahren läuft im Prinzip auf die gleiche Weise ab, wie weiter oben im Zusammenhang mit dem Beispiel 1 beschrieben: Das Flachgewebe wird zunächst mit einer Beschichtungszusammensetzung auf seiner Rückseite beschichtet. Dazu kann das Flachgewebe von einer Rolle über eine Walze geführt werden, auf deren Oberseite eine Rakel in einem vorgegebenen Abstand angeordnet ist. In Transportrichtung des Flachgewebes hinter der Rakel wird die Beschichtungszusammensetzung auf das Flachgewebe gegeben. Anschliessend wird eine der Breite des Flachgewebes entsprechende Vliesbahn parallel zum Flachgewebe auf die Rückseite desselben geführt. Die beiden textilen Schichten mit der dazwischen befindlichen Beschichtungsrezeptur werden dann zusammen in eine Kaschierstation transportiert, wo zunächst eine Erwärmung des Materials und anschliessend ein Verpressen zwischen zwei gegenläufigen Walzen stattfindet. Die Beschichtungsrezeptur bildet somit eine die textile Schicht verbindende Zwischenschicht. Zum Schluss wird das Flachmaterial durch einen Trockenkanal geführt, in welchem in der Zwischenschicht enthaltene Lösungsmittel entzogen werden, so dass der Flachteppich getrocknet und verfestigt wird.

Die Beschichtungszusammensetzung basiert auf einer wässrigen Mischung aus organischen Phosphor/Stickstoffverbindungen kombiniert mit Aluminiumhydroxid mit einer Dispersion auf Basis Polyvinylacetat-Ethylen-Copolymerisat als Binder. Ein entsprechendes Material kann beispielsweise von der Firma Weserland Textilchemie GmbH, Hannover (Deutschland) unter dem Namen Emtex® L 1619-1 bezogen werden. Für den Kaschiervorgang wird eine Temperatur von 120 °C gewählt sowie ein Druck bei den Walzen von ca. 4 Tonnen. Die Auskondensierzeit beträgt 3 Minuten. Die Menge der auf das Flachgewebe gegebenen Zusammensetzung ist so gewählt, dass nach dem Kaschieren und Trocknen des Teppichs die Zwischenschicht noch ein Flächengewicht von ca. 300 g / m² aufweist.

Mit den dargestellten Massnahmen lässt sich ein Flachteppich fertigen mit einem Flächengewicht von ca. 1150 g/m², mit einer hohen Lebensdauer, einer hohen Flammfestigkeit und einer geringen Rauch- und Giftstoffentwicklung im Brandfall; die einschlägigen Flamm-, Rauch- und Toxizitätstests werden erfüllt. Das kaschierte Vlies verhilft dem Teppich zu einer hohen Dimensionsstabilität. Aufgrund der Stahlfasern im Aktivgarnanteil und des entsprechend erniedrigten Oberflächenwiderstands des Teppichs wird die Bildung von statischen Aufladungen vermieden. Das Verlegen des Teppichs erfolgt mit Vorteil durch eine Punktverklebung im Flugzeuginnenraum.

Auch die Parameter des Flachteppichs mit einem Aktivgarn aus Wolle, wie die Garntiter, Fadenzahlen, die Vliesdicke etc. können im Rahmen der Erfindung variiert werden, wobei ähnliche Überlegungen anzustellen sind wie oben im Zusammenhang mit den Beispielen 2-4 ausgeführt.

Zusammenfassend ist festzustellen, dass durch die Erfindung ein Teppich geschaffen wird, welcher ein geringes Flächengewicht aufweist und welcher einfach und schnell im Flugzeug befestigbar ist.

## Patentansprüche

1. Schwer entflammbarer Teppich für den Innenraum von Flugzeugen, umfassend
a) ein eine Nutzoberfläche bildendes maschinengewebtes Gewebe, aufgebaut aus einem Grundgarn im Wesentlichen aus einem schwer entflammbaren thermoplastischen Synthesefasermaterial sowie einem Aktivgarn im Wesentlichen aus einem schwer entflammbaren thermoplastischen Synthesefasermaterial;
**gekennzeichnet durch**
b) ein Vlies, insbesondere ein Nadelvlies, mit einem Flächengewicht von maximal 300 g/m², bevorzugt maximal 250 g/m², im Wesentlichen aus einem schwer entflammbaren thermoplastischen Synthesefasermaterial; sowie
c) eine kleberhaltige Zwischenschicht zwischen dem Vlies und dem maschinengewebten Gewebe, mit einem Flächengewicht von maximal 250 g/m², bevorzugt maximal 200 g/m²,
wobei
d) das Gewebe ein Flachgewebe ist mit einem Flächengewicht von maximal 700 g/m², bevorzugt maximal 550 g/m², und wobei ein Flächengewicht des Teppichs maximal 1100 g/m², bevorzugt maximal 1000 g/m², beträgt.

2. Teppich nach Anspruch 1, **dadurch gekennzeichnet, dass** das Grundgarn, das Aktivgarn und das Vlies aus demselben schwer entflammbaren thermoplastischen Synthesefasermaterial hergestellt sind.

3. Teppich nach Anspruch 2, **dadurch gekennzeichnet, dass** das schwer entflammbare thermoplastische Synthesefasermaterial ein Material auf der Basis von Polyester ist.

4. Teppich nach einem der Ansprüche 1 bis 3, **dadurch gekennzeichnet, dass** das Flachgewebe und das Vlies mit der Zwischenschicht im Rahmen eines Kaschiervorgangs miteinander verbunden werden.

5. Teppich nach einem der Ansprüche 1 bis 4, **dadurch gekennzeichnet, dass** die kleberhaltige Zwischenschicht zwischen dem Vlies und dem Flachgewebe durch eine Zusammensetzung gebildet ist, welche folgendes enthält:
a) einen Klebstoff auf der Basis von Polyacrylat;
b) Wasser;
c) ein Flammschutzmittel, insbesondere auf der Basis von Aluminiumhydroxid Al(OH)₃; und
d) oberflächenaktive Substanzen.

6. Teppich nach Anspruch 5, **dadurch gekennzeichnet, dass** der Anteil des Klebstoffs 40-70 Gew.% und der Anteil des Wassers 20-40 Gew.% beträgt.

7. Teppich nach einem der Ansprüche 1 bis 6, **dadurch gekennzeichnet, dass** das Verhältnis zwischen einem Flächengewicht eines Aktivgarnanteils und einem Flächengewicht eines Grundgarnanteils des Flachgewebes zwischen 1.0 und 2.5, insbesondere zwischen 1.3 und 2.0, beträgt.

8. Teppich nach einem der Ansprüche 1 bis 7, **dadurch gekennzeichnet, dass** das Grundgarn ein Endlosgarn ist mit einem Titer von 400-1'300 Dtex, insbesondere von 600-1'000 Dtex, und dass das Aktivgarn ein Endlosgarn ist mit einem Titer von 2'000-6'000 Dtex, insbesondere von 3'000-5'000 Dtex.

9. Teppich nach einem der Ansprüche 1 bis 8, **dadurch gekennzeichnet, dass** das Aktivgarn einen Anteil von 0.5 - 5 Gew.%, insbesondere von 1-3 Gew.%, Kohlefasern aufweist.

10. Verfahren zum Verlegen eines schwer entflammbaren Teppichs, insbesondere eines Teppichs nach einem der Ansprüche 1 bis 9, im Innenraum von Flugzeugen, wobei der Teppich aus einem die Nutzoberfläche bildenden maschinengewebten Flachgewebe aus einem schwer entflammbaren thermoplastischen Synthesefasermaterial sowie einem mit dem Flachgewebe über eine kleberhaltige Zwischenschicht verbundenen Vlies aus einem schwer entflammbaren thermoplastischen Synthesefasermaterial besteht, **dadurch gekennzeichnet, dass** ein Klettband an mit dem Teppich auszustattenden Flächen befestigt wird und dass anschliessend der Teppich mit seiner durch das Vlies gebildeten Seite am befestigten Klettband angebracht wird.

11. Schwer entflammbarer Teppich für den Innenraum von Flugzeugen, umfassend
a) ein eine Nutzoberfläche bildendes maschinengewebtes Gewebe, aufgebaut aus einem Grundgarn im Wesentlichen aus Polyester und Baumwolle sowie einem Aktivgarn im Wesentlichen aus Wolle;
b) ein Vlies mit einem Flächengewicht von maximal 300 g/m², bevorzugt maximal 250 g/m², im Wesentlichen aus Wolle, mit einer Flammschutzausrüstung; sowie
c) eine kleberhaltige Zwischenschicht zwischen dem Vlies und dem maschinengewebten Gewebe, mit einem Flächengewicht von maximal 400 g/m², bevorzugt maximal 350 g/m²,
wobei
d) das Gewebe ein Flachgewebe ist mit einem Flächengewicht von maximal 800 g/m², bevorzugt maximal 650 g/m², und wobei ein Flächengewicht des Teppichs maximal 1300 g/m², bevorzugt maximal 1150 g/m², beträgt.

12. Teppich nach Anspruch 11, **dadurch gekennzeichnet, dass** das Grundgarn einen Anteil von 50-80 %, insbesondere 60-70 %, Polyester und einen Anteil von 20-50 %, insbesondere 30-40 %, Baumwolle aufweist.

13. Teppich nach Anspruch 11 oder 12, **dadurch gekennzeichnet, dass** das Flachgewebe und das Vlies mit der Zwischenschicht im Rahmen eines Kaschiervorgangs miteinander verbunden werden.

14. Teppich nach einem der Ansprüche 11 bis 13, **dadurch gekennzeichnet, dass** die kleberhaltige Zwischenschicht zwischen dem Vlies und dem Flachgewebe durch eine wässrige Mischung aus organischen Phosphor/Stickstoffverbindungen und Aluminiumhydroxid mit einer Dispersion auf der Basis von Polyvinylacetat-Ethylen-Copolymerisat als Binder gebildet ist.

15. Teppich nach einem der Ansprüche 11 bis 14, **dadurch gekennzeichnet, dass** das Verhältnis zwischen einem Flächengewicht eines Aktivgarnanteils und einem Flächengewicht eines Grundgarnanteils des Flachgewebes zwischen 1.0 und 2.5, insbesondere zwischen 1.3 und 2.0, liegt.

16. Teppich nach einem der Ansprüche 11 bis 15, **dadurch gekennzeichnet, dass** das Grundgarn ein Stapelgarn ist mit einem Titer von 400-1'300 Dtex, insbesondere von 600-1'000 Dtex, und dass das Aktivgarn ein Endlosgarn ist mit einem Titer von 2'000-6'000 Dtex, insbesondere von 3'000-5'000 Dtex.
